# EUROPÄISCHE PATENTANMELDUNG

(11) **EP 0 570 826 A1**
(43) Veröffentlichungstag der Anmeldung: **24.11.1993**
(21) Anmeldenummer: 93107712.7
(22) Anmeldetag: 12.05.1993
(51) Int. Cl.: B01D 71/16, B01D 67/00, D01D 5/06, D01D 5/24, D01F 2/28

(54) **Celluloseacetatmembranen**

(30) Priorität: 20.05.1992 DE 4216658
(71) Anmelder: Akzo Nobel N.V., NL-6824 BM Arnhem (NL)
(72) Erfinder: Dünweg, Gustav, W-5600 Wuppertal 2 (DE); Steinfeld, Lothar, W-5830 Schwelm (DE); Ansorge, Wolfgang, Dr., W-4300 Essen 1 (DE)
(74) Vertreter: Fett, Günter

(57) **Zusammenfassung**

Die Erfindung betrifft eine Dialysemembran in Form eines Hohlfadens mit einem durchgehenden Innenhohlraum aus Celluloseacetat oder einem Celluloseacetat-Derivat, dadurch gekennzeichnet, daß sie einen Siebkoeffizienten für Albumin mit einem Molekulargewicht von 68.000 von höchstens 0,04 aufweist.
Die Erfindung betrifft ebenfalls ein Verfahren zur Herstellung einer Dialysemembran in Form eines Hohlfadens mit einem durchgeheneden Innenhohlraum, wobei man eine eine organische Carbonsäure enthaltende Spinnlösung und eine hohlraumbildende Flüssigkeit, gegebenenfalls unter Zusatz von Modifizierungsmitteln und/oder Wasser, durch eine für die Herstellung von Hohlfäden geeignete Spinndüse extrudiert und danach in einem Fällbad die Ausfällung der so gebildeten Dialysemembran und eine übliche weitere Nachbehandlung erfolgt, dadurch gekennzeichnet, daß die organische Carbonsäure eine Essigsäure ist und das Fällbad eine verdünnte Essigsäure ist.

## Beschreibung

Die Erfindung betrifft eine Dialysemembran in Form eines Hohlfadens mit einem durchgehenden Innenhohlraum aus Celluloseacetat oder einem Celluloseacetat-Derivat, sowie ein Verfahren zur Herstellung dieses Hohlfadens.

Celluloseacetatmembranen, die in beliebiger Form vorliegen können, sind seit längerer Zeit bekannt. So sind etwa in den US-Patentschriften 3,133,132, 3,133,137, 3,170,867, 3,283,042, 3,310,488, 3,344,214 und 3,364,288 Verfahren zur Herstellung von semipermeablen Membranen beschrieben, die für die umgekehrte Osmose oder für die Ultrafiltration geeignet sind. Bei allen diesen Verfahren handelt es sich jedoch ausschließlich um Flachmembranen. Durch den hohen Wassergehalt der Membranen sind dieselben in einem trockenen Zustand nicht lagerfähig. Zudem sind die vorgenannt hergestellten Membranen nicht für lange Zeiten ohne Änderung ihrer Qualität lagerfähig.

In der Europäischen Patentschrift 376 069 sind biokompatible Dialysemembranen, geeignet für die Hämodialyse, in der Form von Flachmembranen, Schlauchmembranen oder Hohlfasermembranen beschrieben, die aus Polysaccaridestern und entsprechenden Carbonsäuren hergestellt werden.

Die Sowjetische Patentanmeldung 1435583 beschreibt ein Verfahren zur Herstellung von semipermeablen Membranen, die beispielsweise aus Acetylcellulose bestehen, indem Acetylcellulose in zwei Schritten entweder mit Aceton und Wasser oder mit Essigsäure und Wasser behandelt wird, wobei das erste Behandlungsbad die höhere Konzentration an Aceton bzw. Essigsäure aufweist.

In der Japanischen Patentschrift 89028123 ist ein Verfahren zur Herstellung von Celluloseesterhohlfasern beschrieben, bei dem durch Schmelzspinnen einer Mischung eines Celluloseesters, eines Alkohols und anschließende Hindurchführung durch eine salzhaltige Lösung die Hohlfasern hergestellt werden. Die wäßrige Lösung kann dabei Essigsäure enthalten.

In der Japanischen Patentanmeldung 57042740 werden poröse Membranen hergestellt, indem eine Lösung, die ein Cellulosederivat und ein Lösungsmittel für dieses Cellulosederivat in ein Koagulationsbad gegeben werden, das mehr als 60 Gew.-% eines organischen Lösungsmittels enthält, das ein Nichtlöser für das Cellulosederivat ist. Das Lösungsmittel für die Cellulosederivate kann unter anderem Essigsäure sein.

In der DE 28 35 890 sind Membranen für die umgekehrte Osmose beschrieben, die beispielsweise aus Celluloseacetat bestehen können. Hergestellt werden diese Membranen aus einer Lösung, die das Cellulosederivat, ein organisches Lösungsmittel und eine Tetracarboxylsäure enthält. Das organische Lösungsmittel kann beispielsweise Essigsäure sein.

In der JP 52123983 ist ein Verfahren beschrieben, bei dem die Dicke einer Membranwand erhöht werden soll. Hierbei wird die Membran einer Lösung von 45 bis 55 Gew.-% wäßriger Essigsäure ausgesetzt.

Schließlich beschreibt die DE-OS 19 08 344 ein Verfahren zur Herstellung von Celluloseestermembranen aus Essigsäure, Aceton und einem Aminsalz als porenbildende Substanz.

Die vorgenannten Membranen lassen in ihrer Biokompatibilität bzw. in ihren Trennungseigenschaften jedoch zu wünschen übrig.

Für die Dialyse geeignet Membranen sollten eine möglichst hohe Biokompatibilität aufweisen. Hierfür müssen eine Reihe von Bedingungen erfüllt sein.

Zu den Substanzen, die die Biokompatibilität einer Membran beeinflussen, gehören etwa das Albumin und das β2-Mikroglobulin. β2-Mikroglobulin (Molekulargewicht ca. 11.800) ist locker an die Oberfläche aller kernhaltigen Zellen als Teil des Haupt-Histokompatibilitäts-Komplexes gebunden. Dieser Komplex ist u.a. für die Verträglichkeit von fremdem Gewebe mit körpereigenem Gewebe verantwortlich.

β2-Mikroblobulin wird ausschließlich in der Niere abgebaut, die tägliche Produktionsrate beim gesunden Menschen beträgt etwa 150 mg. Dialysepatienten und Urämiker haben jedoch wesentlich höhere β2-Mikroglobulin-Serumspiegel als Gesunde. Es ist daher von großem Interesse, daß das β2-Mikroglobulin während der Behandlung effektiv entfernt wird.

Die Albumine gehören ebenfalls zur Gruppe der Serumproteine, und stellen darin die größte Gruppe dar. Die Albumine halten den kolloidosmotischen Druck aufrecht und transportieren körpereigene und körperfremde niedermolekulare Stoffe. Außerdem bilden sie das Eiweißreservoir des Körpers.

Da beim Dialysepatienten die Zahl der Albumine im allgemeinen vermindert ist, ist bei einer Behandlung darauf zu achten, daß der Albuminverlust möglichst gering ist.

Je nach Anwendungsbereich muß eine Membran bei verschiedenen Ultrafiltrationsraten gleich gute Leistungsparameter, z.B. Siebkoeffizienten, aufweisen können.

Bisher war es jedoch üblich, daß Membranen, die bei einer hohen Ultrafiltrationsrate (high-flux-Bereich) entsprechende Siebkoeffizienten für β2-Mikroglobulin und Albumin aufwiesen, diese Daten nicht bei einer mittleren Ultrafiltrationsrate (middle-flux-Bereich) oder bei einer niedrigen bis sehr niedrigen Ultrafiltrationsrate (low-flux-Bereich) erreichten.

Oder aber eine beispielsweise im low-flux-Bereich gut arbeitende Membran fiel im high-flux-Bereich bezüglich ihrer Trennwirkung stark ab.

Es ist daher Aufgabe der Erfindung, eine Membran zur Verfügung zu stellen, die einen geringen Albuminverlust zeigt und eine hohe Permeabilität für β2-Mikroglobulin aufweist. Diese Werte sollen außerdem für einen breiten Bereich der Ultrafiltrationsrate konstant bleiben.

Diese Aufgabe wird gelöst durch eine Membran der eingangs genannten Art, dadurch gekennzeichnet, daß sie einen Siebkoeffizienten für Albumin mit einem Molekulargewicht von 68.000 von höchstens 0,04 aufweist.

Bevorzugt wird mit der Dialysemembran bei einer vierstündigen Blutwäsche mit einer wirksamen Dialysatorfläche von 1 m² und einem Blutfluß von 100 ml/min weniger als 5 Gramm Albumin mit einem Molekulargewicht von 68000 entfernt.

Die Dialysemembran ist weiterhin dadurch gekennzeichnet, daß sie einen Siebkoeffizienten für β2-Mikroglobulin mit einem Molekulargewicht von 11.800 von größer als 0,5 aufweist.

Bevorzugt weist die Dialysemembran eine Ultrafiltrationsrate von 2 bis 200 ml/m².h.mm Hg auf.

Es hat sich als vorteilhaft für die Erfindung erwiesen, wenn die Dialysemembran aus Celluloseacetat mit einem Actylierungsgrad von 2,0 bis 3,0, bevorzugt von 2,4 bis 2,6 besteht.

Unter dem mittleren Acetylierungsgrad wird die mittlere Anzahl der pro Cellulosemolekül substituierten OH-Gruppen verstanden.

Die Aufgabe wird ebenfalls gelöst durch ein Verfahren zur Herstellung einer Dialysemembran in Form eines Hohlfadens mit einem durchgehenden Innenhohlraum, wobei man eine eine organische Carbonsäure enthaltende Spinnlösung und eine hohlraumbildende Flüssigkeit, ggf. unter Zusatz von Modifizierungsmitteln und/oder Wasser, durch eine für die Herstellung von Hohlfäden geeignete Spinndüse extrudiert und danach in einem Fällbad die Ausfällung der so gebildeten Dialysemembran und eine übliche weitere Nachbehandlung erfolgt, dadurch gekennzeichnet, daß die organische Carbonsäure eine Essigsäure ist und das Fällbad eine verdünnte Essigsäure ist.

Bevorzugt wird das Fällbad auf eine Temperatur zwischen 0 und 16°C gehalten.

In Ausgestaltung der Erfindung wird die extrudierte Spinnmasse über eine Strecke von mehr als 50 cm durch das Fällbad geführt, bevor eine erste Umlenkung des gebildeten Hohlfadens erfolgt.

In Ausgestaltung der Erfindung enthält die Spinnlösung als Modifizierungsmittel Polyethylenglykol.

Bevorzugt enthält die Spinnlösung als Modifizierungsmittel Glycerin, Polypropylenglykol, Mischpolymerisate von Ethylenoxid und Propylenoxid oder Polyvinylpyrrolidon.

Bevorzugt enthält die Spinnlösung 9 bis 20 Gew.-% Celluloseacetat, 42 bis 91 Gew.-% Essigsäure,
20 bis 0 Gew.-% Wasser und 18 bis 0 Gew.-% Modifizierungsmittel.

Das erfindungsgemäße Verfahren führt insbesondere dann zu guten Ergebnissen, wenn die Spinnlösung 10 bis 15 Gew.-% Celluloseacetat, 52 bis 75 Gew.-% Essigsäure,
18 bis 10 Gew.-% Wasser und 15 bis 10 Gew.-% Modifizierungsmittel enthält.

Bevorzugt wird die Essigsäure im Fällbad auf eine Konzentration zwischen 1 und 20 Gew.-% gehalten.

Es hat sich ebenfalls als vorteilhaft für das Verfahren erwiesen, wenn die Spinndüse in das Fällbad eingetaucht ist und der Hohlfaden von unten nach oben gesponnen wird.

Gemäß einer anderen bevorzugten Ausführungsform des Verfahrens beträgt der Abstand zwischen Spinndüse und dem Fällbad 0,5 bis 10 cm, vorzugsweise jedoch 2 bis 5 cm.

Als Celluloseacetatderivate, wie sie für die Erfindung verwendet werden können, sind die zu nennen, wie sie in der DE-OS 39 01 947 offenbart sind, und die eine durch die Formel 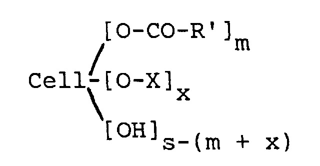
wiedergegebene Struktur aufweisen, worin Cell das Gerüst des unmodifizierten Cellulosemoleküls oder des Chitinmoleküls jeweils ohne Hydroxylgruppen ist, s beim unmodifizierten Cellulosemolekül 3 und beim Chitinmolekül 2 beträgt und worin
- **R'**:: CH₃ und/oder C₂H₅ und/oder C₃H₇
- **X :**: CO-R und/oder CS-R und/oder CO-CR''₂-CO-CHR''₂ und/oder CO-OR und/oder CONH-R und/oder CONR''R und/oder CSNH-R und/oder CSNR''R und/oder SO₂-R und/oder SO₂NR''R und/oder SO-R und/oder SONR''R und/oder PO₃H₂ (Salz) und/oder PO₂R''R und/oder POR''₂ und/oder PO(OR'')₂ und/oder CR''₂-CR''(OH)-R und/oder CR''₂-CR''(SH)-R und/oder CR''₂-CR''₂-NHR und/oder R-COOH (Salz) und/oder R-SO₃H (Salz) und/oder R und/oder CH₂-CH₂-NR''₂ und/oder CH₂-CH₂-SO₂-R sind.

wobei
- **R** :: Alkyl und/oder Alkenyl und/oder Alkinyl (geradkettig und/oder verzweigt und ggf. substituiert, wobei die Kohlenstoffkette auch durch Heteroatome wie O, S, N, P, Si sowie CO- oder COO-Gruppe unterbrochen sein kann) und/oder Cycloalkyl (ggf. mit Heteroatomen und/oder substituiert) und/oder Aryl und/oder Arylalkyl und/oder Arylalkenyl und/oder Arylalkinyl (ggf. mit Heteroatomen und/oder substituiert) und/oder Bisaryl (ggf. substituiert) und/oder Rest einer kondensierten aromatischen Verbindung (ggf. substituiert) und/oder Rest einer heterocyclischen Verbindung (ggf. substituiert) und
mit **"sustituiert"** neben Resten im Sinne von R auch folgende Gruppen gemeint sind:
-NR''₂ und/oder -N⁺R''₃ und/oder COOH auch als Salz und/oder -COOR'' und/oder CONR''₂ und/oder -CO-R'' und/oder -CSOH auch als Salz und/oder -CSOR'' und/oder -CSNR''₂ und/oder -SO₃H auch als Salz und/oder -SO₃R'' und/oder -SO₂NR''₂ und/oder -SR'' und/oder -SOR'' und/oder -SONR''₂ und/oder -PO₃H₂ auch als Salz und/oder -PO(OR'')₂ und/oder PO₂H(NR''₂) und/oder -PO(NR''₂)₂ und/oder PO₂H₂ und/oder -POH(OR'') und/oder -CN und/oder -NO₂ und/oder -OR'' und/oder Halogen und/oder -Si(OR'')₃
wobei
- **R''**:: H oder R ist,

und
- **m** :: 0,75 - 2,85
- **x** :: 0,005 - 2,10
beträgt.

Die Erfindung wird in den nachstehenden Beispielen näher erläutert.

### Beispiel 1

Eine Spinnlösung, bestehend aus 62,5 Gew.-% Essigsäure einer Konzentration von 99,9 Gew.-%, 12,5 Gew.-% Cellulosediacetat aus Linterscellulose mit einem Acetylierungsgrad von 2,42, 10,5 Gew.-% Wasser und 14,5 Gew.-% Polyethylenglykol 400 wurde durch eine Ringschlitzdüse zur Hohlfadenspinnung extrudiert und in ein Fällbad, das 40 g Essigsäure auf einen Liter Wasser enthielt, gebracht. Die Fällbadtemperatur betrug 10°C. Gleichzeitig mit dem Ausbringen der Spinnlösung wurde eine Innenfüllung, bestehend aus Isopropylmyristat durch die zentrisch angeordnete Innenfüllungszuführung in den Innenraum des sich bildenden Hohlfadens gegeben.

Die Spinndüse war senkrecht über dem Fällbad angeordnet, ihre Austrittsöffnung wies nach unten, der Abstand zur Fällbadoberfläche betrug 4 cm. Der aus der Spinndüse austretende kombinierte Strahl von Spinnlösung und Innenfüllung durchfiel nach Passieren des Luftspaltes das Fällbad bis zu einer Tiefe von 85 cm, um dann an einer dort angebrachten Umlenkwalze schräg nach oben weitergeführt zu werden. Die Spinngeschwindigkeit betrug 51 m/min. Anschließend wurde der Hohlfaden durch mehrfaches Waschen von Lösungsmittel und Begleitstoffen befreit und zuletzt mit Glycerin behandelt. Nach der Naßphase wurde der Hohlfaden in einem Trommeltrockner bei 50 bis 65°C getrocknet.

Nach der Trocknung wurde der fertige Hohlfaden auf Kreuzspulen aufgewickelt. Der Hohlfaden besaß einen Innendurchmesser von 220 µ und eine Wandstärke von 30 µ (bei 15% Wassergehalt und 60% Glyceringehalt).
Der Hohlfaden wies die folgenden Eigenschaften auf:
Ultratiltrationsrate: 180 ml/m².h.mm Hg
Dialytische Permeabilität für Vitamin B12: 16,5 cm/min .10⁻³
Dialytische Permeabilität für Kreatinin 48 cm/min . 10⁻³
Dialytische Permeabilität für Harnstoff 65 cm/min . 10⁻³
Der in Rinderserum gemessene Siebkoeffizient für Albumin betrug 0,03
Der in Rinderserum gemessene Siebkoeffizient für β2-Mikroglobulin (gemessen als Cytochrom-C) betrug 0,67.

### Beispiel 2

Es wurden Cellulosediacetat-Hohlfäden gemäß Beispiel 1 hergestellt, die jedoch nach Verlassen des Trommeltrockners (Temperatur 45 - 55°C) einer Ondulierungsapparatur zugeführt wurden. In diesem Gerät wurden die Hohlfäden zwischen zwei Lagen von quer angeordneten V-Profilen, die sich im Abstand von 30 mm und 2,5 mm vertikal verzahnen, unter Erwärmung auf 45°C transportiert. Die Behandlungszeit betrug eine Sekunde. Danach waren die Hohlfäden mit einer Wellenprägung versehen, die sich als Kräuseldehnung von 1,5 ± 0,5% nachweisen ließ. Die so behandelten Hohlfäden wurden direkt zum Bündeln für die Herstellung von Dialysemodulen aufgewickelt. Die hieraus gefertigten Module zeigten bei einer wirksamen Oberfläche von 1,42 m² eine Harnstoffclearance von 187 ± 4 ml/min.

### Beispiele 3 bis 5

Es wurden Hohlfäden auf der gleichen Weise wie in Beispiel 1 hergestellt, jedoch weisen die Spinnlösungen die in Tabelle 1 wiedergegebenen Zusammensetzungen auf:

| Zusammensetzung der Spinnlösung (in Gew.-%) | | | | |
|---|---|---|---|---|
| | Celluloseacetat | Essigsäure | Wasser | PEG 400 |
| Beispiel 3 | 12,5 | 62,5 | 11,0 | 14,0 |
| Beispiel 4 | 12,5 | 62,5 | 15,0 | 10,0 |
| Beispiel 5 | 12,5 | 62,5 | 18,0 | 7,0 |

Die so erhaltenen Hohlfäden weisen die gleichen Abmessungen wie die des Beispiels 1 auf.

Der für Rinderserum gemessene Siebkoeffizient für Albumin betrug für
Beispiel 3 0,02
Beispiel 4 0,07 (Vergleichsbeispiel)
Beispiel 5 0,11 (Vergleichsbeispiel)
Eine Erhöhung des Wassergehaltes bei gleichzeitiger Verminderung des Gehaltes an Modifizierungsmittel führt somit zu einer Zunahme der Permeabilität für Albumin.

### Beispiel 6

Mit einer Spinnlösung wie in Beispiel 4 wurde ein Hohlfaden nach dem Verfahren des Beispiels 1 hergesellt. Für die Innenfüllflüssigkeit wurde anstelle von Isopropylmyristat Paraffinöl verwendet. Es wurde ein Hohlfaden mit den gleichen Eigenschaften und Abmessung wie in Beispiel 1 bzw. 3 erhalten; der in Rinderserum gemessene Siebkoeffizient für Albumin betrug 0,03.

## Patentansprüche

1. Dialysemembran in Form eines Hohlfadens mit einem durchgehenden Innenhohlraum aus Celluloseacetat oder einem Celluloseacetat-Derivat, dadurch gekennzeichnet, daß sie einen Siebkoeffizienten für Albumin mit einem Molekulargewicht von 68.000 von höchstens 0,04 aufweist.

2. Dialysemembran nach Anspruch 1, dadurch gekennzeichnet, daß mit ihr bei einer vierstündigen Blutwäsche mit einer wirksamen Dialysatorfläche von 1 m² und einem Blutfluß von 100 ml/min weniger als 5 Gramm Albumin mit einem Molekulargewicht von 68.000 entfernt wird.

3. Dialysemembran nach Anspruch 1 oder 2, dadurch gekennzeichnet, daß sie einen Siebkoeffizienten für β2-Mikroglobulin mit einem Molekulargewicht von 11.800 von größer als 0,5 aufweist.

4. Dialysemembran nach einem oder mehreren der Ansprüche 1 bis 3, dadurch gekennzeichnet, daß sie eine Ultrafiltrationsrate von 2 bis 200 ml/m².h.mm Hg aufweist.

5. Dialysemembran nach einem oder mehreren der Ansprüche 1 bis 4, dadurch gekennzeichnet, daß sie aus Celluloseacetat mit einen mittleren Acetylierungsgrad von 2,0 bis 3,0, bevorzugt 2,4 bis 2,6 besteht.

6. Verfahren zur Herstellung einer Dialysemembran in Form eines Hohlfadens mit einem durchgeheneden Innenhohlraum nach einem oder mehreren der Ansprüche 1 bis 5, wobei man eine eine organische Carbonsäure enthaltende Spinnlösung und eine hohlraumbildende Flüssigkeit, gegebenenfalls unter Zusatz von Modifizierungsmitteln und/oder Wasser, durch eine für die Herstellung von Hohlfäden geeignete Spinndüse extrudiert und danach in einem Fällbad die Ausfällung der so gebildeten Dialysemembran und eine übliche weitere Nachbehandlung erfolgt, dadurch gekennzeichnet, daß die organische Carbonsäure eine Essigsäure ist und das Fällbad eine verdünnte Essigsäure ist.

7. Verfahren nach Anspruch 6, dadurch gekennzeichnet, daß die Fällbad auf eine Temperatur zwischen 0 und 16°C gehalten wird.

8. Verfahren nach Anspruch 6 oder 7, dadurch gekennzeichnet, daß die extrudierte Spinnlösung über eine Strecke von mehr als 50 cm durch das Fällbad geführt wird, bevor eine erste Umlenkung des gebildeten Hohlfadens erfolgt.

9. Verfahren nach einem oder mehreren der Ansprüche 6 bis 8, dadurch gekennzeichnet, daß die Spinnlösung als Modifizierungsmittel Glycerin, Polypropylenglykol, Mischpolymerisate von Ethylenoxid und Propylenoxid, oder Polyvinylpyrrolidon enthält.

10. Verfahren nach einem oder mehreren der Ansprüche 6 bis 8, dadurch gekennzeichnet, daß die Spinnlösung als Modifizierungsmittel Polyethylenglykol enthält.

11. Verfahren nach einem oder mehreren der Ansprüche 6 bis 10, dadurch gekennzeichnet, daß die Spinnlösung 9 bis 20 Gew.-% Celluloseacetat, 42 bis 91 Gew.-% Essigsäure, 20 bis 0 Gew.-% Wasser und 18 bis 0 Gew.-% Modifizierungsmittel enthält.

12. Verfahren nach Anspruch 11, dadurch gekennzeichnet, daß die Spinnlösung 10 bis 15 Gew.-% Celluloseacetat, 52 bis 75 Gew.-% Essigsäure, 18 bis 10 Gew.% Wasser und 15 bis 5 Gew.-% Modifizierungsmittel enthält.

13. Verfahren nach einem oder mehreren der Ansprüche 6 bis 12, dadurch gekennzeichnet, daß die Essigsäureim Fällbad auf eine Konzentration zwischen 1 und 20 Gew.-% gehalten wird.

14. Verfahren nach einem oder mehreren der Ansprüche 6 bis 13, dadurch gekennzeichnet, daß die Spinndüse in das Fällbad eingetaucht ist und der Hohlfaden von unten nach oben gesponnen wird.

15. Verfahren nach einem oder mehreren der Ansprüche 6 bis 13, dadurch gekennzeichnet, daß zwischen Spinndüse und dem Fällbad ein Abstand von 0,5 bis 10 cm, vorzugsweise von 2 bis 5 cm besteht.
